# EUROPEAN PATENT APPLICATION

(11) **EP 3 209 022 A1**
(43) Date of publication of application: **23.08.2017**
(21) Application number: 16305195.6
(22) Date of filing: 19.02.2016
(51) Int. Cl.: H04N 19/70, H04N 19/117, H04N 19/182, H04N 19/194, H04N 19/82, H04N 19/86

(54) **A METHOD FOR ENCODING AND A METHOD FOR DECODING A BLOCK OF COLOR SAMPLES AND CORRESPONDING DEVICES**

(71) Applicant: Thomson Licensing, 92130 Issy-les-Moulineaux (FR)
(72) Inventor: BORDES, Philippe, 35576 Cesson Sevigne Cedex (FR); POIRIER, Tangi, 35576 Cesson Sevigne Cedex (FR); RACAPE, Fabien, 35576 Cesson Sevigne Cedex (FR)
(74) Representative: Huchet, Anne

(57) **Abstract**

A decoding method is disclosed. The decoding method comprises :
- decoding a block of color samples;
- applying a first pass and a second pass of filtering on said decoded block of color samples, filtering comprising classifying the color samples into categories and adding a decoded offset value to color samples in at least one category; wherein applying a second pass of filtering comprises:
- decoding a syntax element indicating whether at least one offset value of the second pass is to be set equal to one offset value of the first pass;
- determining the at least one offset value of the second pass responsive to said decoded syntax element.

## Description

### 1. TECHNICAL FIELD

In the following, a method for encoding and a method for decoding a block of color samples are disclosed wherein the block belongs to an image or to a sequence of images, also called video. Corresponding encoding and decoding devices are also disclosed.

### 2. BACKGROUND ART

Traditional video codecs schemes include in-loop filtering processes for improving the quality of reconstructed images.

One state-of-art in-loop filter, complying with HEVC, is the Sample Adaptive Offset (SAO), described in section 8.7.3 of the document ITU-T H.265 entitled *"High Efficiency Video Coding".* Such offset filter allows adding offsets to some pixels in order to reduce coding artefacts. Two types of filtering may be performed when the SAO filtering is enabled (or activated): Edge Offset (EO) type or Band Offset (BO) type. The type of SAO filtering is decoded from a stream for a whole block, namely a whole CTB in the case of HEVC (CTB stands for Coding Tree Block). However, in HEVC, the type of SAO filtering for chroma CTB are identical.

For the two types of filtering, the color samples of a block are first classified into M categories at least according to the value of the color sample to be classified, M being an integer (in HEVC, M=5 for the EO type and M=32 for the BO type). An offset value is then assigned to each category or to a subset of categories. The offset value may be inferred to be equal to zero, may be derived from an offset value of a neighboring decoded block or may be decoded from the stream. The offset value assigned to the category to which the color sample belongs is added to its value. In HEVC, at most four offset values may be decoded from the stream for each slice and each color.

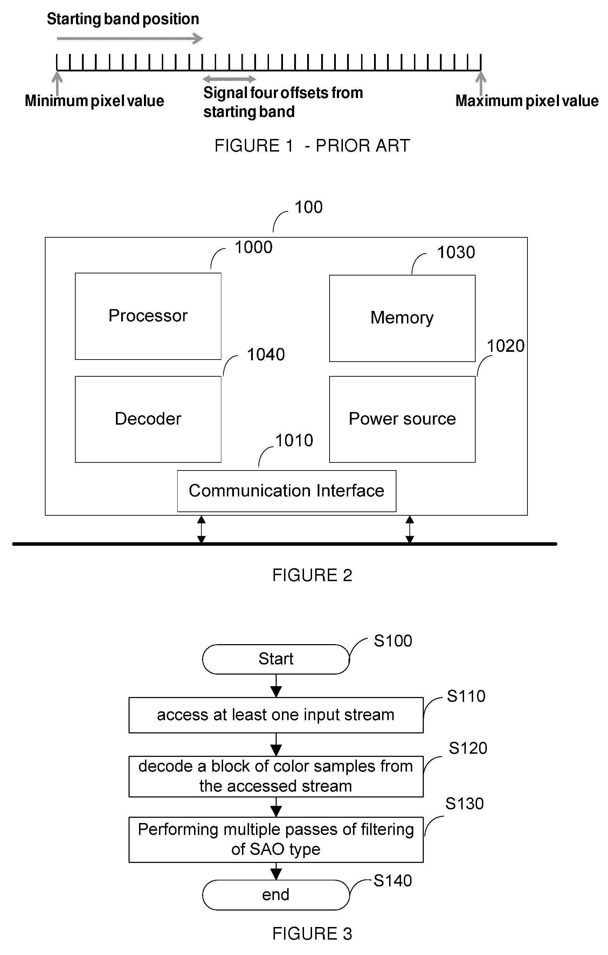

In the case of BO type, a category is named a band. The color samples of a decoded block are classified into 32 bands by quantizing their values as shown in **figure 1****.** For each of N (N=4 in HEVC) consecutive bands, an offset value may be decoded from the stream, N being an integer and N≤M. The four consecutive bands are indicated by a starting band position decoded from the stream which is indicated by the syntax element sao_band_position in HEVC.

In the case of EO type, an edge offset class is decoded from the stream (EO_O, EO_45, EO_90 or EO_ 135). The color samples of a decoded block are classified into 5 categories identified by indices 0 to 4. The classification is based on a comparison between the value of a color sample and the values of its neighboring color samples along a direction identified by the class. For each of N categories (N=4 in HEVC) an offset value may be decoded from the stream.

SAO is used to reduce coding artifacts and improve prediction of blocks. However, the number of bands (BO) or categories (EO) for which an offset value may be decoded from the stream is limited to four in HEVC.

It would hence be desirable to provide a technique for encoding and/or decoding an image or a sequence of images aiming at reducing coding artefacts more efficiently.

### 3. BRIEF SUMMARY

A decoding method is disclosed that comprises:
- decoding a block of color samples;
- applying a first pass and a second pass of filtering on said decoded block of color samples, filtering comprising classifying the color samples into categories and adding a decoded offset value to color samples in at least one category; wherein applying a second pass of filtering comprises:
- decoding a syntax element indicating whether at least one offset value of the second pass is to be set equal to one offset value of the first pass;
- determining the at least one offset value of the second pass responsive to said decoded syntax element.

A coding method is also disclosed that comprises:
- coding and decoding a block of color samples;
- applying a first pass and a second pass of filtering on said decoded block of color samples, filtering comprising classifying the color samples into categories and adding a coded offset value to color samples in at least one category;
wherein applying a second pass of filtering comprises:
- coding a syntax element indicating whether at least one offset value of the second pass is to be set equal to one offset value of the first pass;
- determining the at least one offset value of the second pass responsive to said coded syntax element.

A decoding device is disclosed that comprises:
- means for decoding a block of color samples;
- means for applying a first pass and a second pass of filtering on said decoded block of color samples, filtering comprising classifying the color samples into categories and adding a decoded offset value to color samples in at least one category;
wherein said means for applying a second pass of filtering comprises:
- means for decoding a syntax element indicating whether at least one offset value of the second pass is to be set equal to one offset value of the first pass;
- means for determining the at least one offset value of the second pass responsive to said decoded syntax element.

A coding device is disclosed that comprises:
- means for coding and decoding a block of color samples;
- means for applying a first pass and a second pass of filtering on said decoded block of color samples, filtering comprising classifying the color samples into categories and adding a coded offset value to color samples in at least one category;
wherein said means for applying a second pass of filtering comprises:
- means for coding a syntax element indicating whether at least one offset value of the second pass is to be set equal to one offset value of the first pass;
- means for determining the at least one offset value of the second pass responsive to said coded syntax element.

A decoding device is disclosed that comprises a communication interface configured to access at least a stream and at least one processor configured to:
- decode a block of color samples from the accessed stream;
- apply a first pass and a second pass of filtering on said decoded block of color samples, filtering comprising classifying the color samples into categories and adding a decoded offset value to color samples in at least one category;
wherein to apply a second pass of filtering comprises:
- to decode a syntax element, from said accessed stream, indicating whether at least one offset value of the second pass is to be set equal to one offset value of the first pass;
- to determine the at least one offset value of the second pass responsive to said decoded syntax element.

A coding device is disclosed that comprises a communication interface configured to access at least a block of color samples and at least one processor configured to:
- code and decode the accessed block of color samples;
- apply a first pass and a second pass of filtering on said decoded block of color samples, filtering comprising classifying the color samples into categories and adding a coded offset value to color samples in at least one category;
wherein to apply a second pass of filtering comprises:
- to code a syntax element indicating whether at least one offset value of the second pass is to be set equal to one offset value of the first pass;
- to determine the at least one offset value of the second pass responsive to said coded syntax element.

A non-transitory computer readable medium is disclosed which has instructions stored therein which, upon execution, instruct at least one processor to:
- decode a block of color samples;
- apply a first pass and a second pass of filtering on said decoded block of color samples, filtering comprising classifying the color samples into categories and adding a decoded offset value to color samples in at least one category;
wherein to apply a second pass of filtering comprises:
- to decode a syntax element indicating whether at least one offset value of the second pass is to be set equal to one offset value of the first pass;
- to determine the at least one offset value of the second pass responsive to said decoded syntax element.

A non-transitory computer readable medium is disclosed which has instructions stored therein which, upon execution, instruct at least one processor to:
- code and decode a block of color samples;
- apply a first pass and a second pass of filtering on said decoded block of color samples, filtering comprising classifying the color samples into categories and adding a coded offset value to color samples in at least one category;
wherein to apply a second pass of filtering comprises:
- to code a syntax element indicating whether at least one offset value of the second pass is to be set equal to one offset value of the first pass;
- to determine the at least one offset value of the second pass responsive to said coded syntax element.

A stream is disclosed that comprises information representative of a coded block of color samples and a syntax element for the coded block of color samples indicating whether at least one offset value of a second pass of a multiple passes of filtering of SAO type is to be set equal to one corresponding offset value of a first pass of the multiple passes of filtering of SAO type.

A non-transitory processor readable medium having stored thereon a stream is disclosed, wherein the stream comprises:
information representative of a coded block of color samples; and
a syntax element for the coded block of color samples indicating whether at least one offset value of a second pass of a multiple passes of filtering of SAO type is to be set equal to one corresponding offset value of a first pass of the multiple passes of filtering of SAO type.

Advantageously, the syntax element further indicates whether the type of SAO filtering for the second pass is to be set equal to the type of SAO filtering for the first pass.

In another specific embodiment, the color samples to which a decoded offset value (a coded offset value respectively) is added during the first pass are not considered during the second pass of filtering.

In a variant, the color samples to which a non-zero decoded offset value (a coded offset value respectively) is added during the first pass are not considered during the second pass of filtering.

In another embodiment, in the case where the first pass of filtering is disabled for the block of color samples, the second pass of filtering is either disabled or enabled with parameters derived from at least one neighboring block of color samples.

In a specific embodiment, the type of SAO filtering for a pass is conditioned by the type of SAO filtering in the previous pass.

The present embodiments also provide a decoding method comprising:
- decoding a block of color samples;
- applying at least a first pass and a second pass of filtering on said decoded block of color samples, filtering comprising classifying the color samples into categories and adding a decoded offset value to color samples in at least one category;
wherein the color samples to which a decoded offset value is added during the first pass are not considered during the second pass of filtering.

The present embodiments also provide a coding method comprising:
- coding and decoding a block of color samples;
- applying at least a first pass and a second pass of filtering on said decoded block of color samples, filtering comprising classifying the color samples into categories and adding a decoded offset value to color samples in at least one category;
wherein the color samples to which a decoded offset value is added during the first pass are not considered during the second pass of filtering.

The present embodiments also provide a decoding device comprising a communication interface configured to access at least a stream and at least one processor configured to:
- decoding a block of color samples from the accessed stream;
- applying at least a first pass and a second pass of filtering on said decoded block of color samples, filtering comprising classifying the color samples into categories and adding a decoded offset value to color samples in at least one category;
wherein the color samples to which a decoded offset value is added during the first pass are not considered during the second pass of filtering.

The present embodiments also provide a coding device comprising a communication interface configured to access at least a block of color samples and at least one processor configured to:
- coding and decoding the accessed block of color samples;
- applying at least a first pass and a second pass of filtering on said decoded block of color samples, filtering comprising classifying the color samples into categories and adding a decoded offset value to color samples in at least one category;
wherein the color samples to which a decoded offset value is added during the first pass are not considered during the second pass of filtering.

### 4. BRIEF SUMMARY OF THE DRAWINGS

- Figure 1 illustrates the splitting of the color sample range into 32 bands as specified in HEVC;
- Figure 2 represents an exemplary architecture of a receiver configured to decode a block of color samples from a stream to obtain a decoded block according to a specific and non-limiting embodiment;
- Figure 3 represents a flowchart of a decoding method according to a specific and non-limiting embodiment;
- Figures 4 to 7 represents a detailed flowchart of step S130 of the decoding method of figure 3 according to specific and non-limiting embodiments;
- Figure 8 represents an exemplary architecture of a transmitter 100 configured to encode a block of color samples in a stream according to a non-limiting embodiment; and
- Figure 9 represents a flowchart of a method for encoding a block of color samples in a stream according to a specific and non-limiting embodiment.

### 5. DETAILED DESCRIPTION

It is to be understood that the figures and descriptions have been simplified to illustrate elements that are relevant for a clear understanding of the present principles, while eliminating, for purposes of clarity, many other elements found in typical encoding and/or decoding devices. It will be understood that, although the terms first and second may be used herein to describe various elements, these elements should not be limited by these terms. These terms are only used to distinguish one element from another. In the following sections, a block is composed of color samples, e.g. luma samples or chroma samples, etc. A block of color samples may be square, rectangular, or more generally may be a group of adjacent samples of any shape. As an example a block may be a CTB ("Coding Tree Block"), a macroblock, etc. A unit (such as a "Coding Unit" or an image) is composed of several blocks of color samples (a luma block and possibly one or more chroma block(s)). In the following, the word "reconstructed" and "decoded" may be used as synonyms. According to the present principles, filtering of SAO type comprises classifying color samples of a decoded block into categories according at least to their values and adding an offset value to at least one color sample depending on its category. The offset value may be decoded from the stream or derived from offset values of neighboring decoded blocks. As an example, the category may be a category as defined for the EO type in HEVC, a band as defined for the BO type in HEVC.

The methods disclosed may comply with any video coding standard, including for example HEVC or HEVC extensions like Format Range (RExt), Scalability (SHVC), and Multi-View (MV-HEVC) Extensions.

**Figure 2** represents an exemplary architecture of a receiver 100 configured to decode a block of color samples from a stream to obtain a decoded block according to a specific and non-limiting embodiment.

The receiver 100 comprises one or more processor(s) 1000, which could comprise, for example, a CPU, a GPU and/or a DSP (English acronym of Digital Signal Processor), along with internal memory 1030 (e.g. RAM, ROM and/or EPROM). The receiver 100 comprises one or more communication interface(s) 1010 (e.g. a keyboard, a mouse, a touchpad, a webcam), each adapted to display output information and/or allow a user to enter commands and/or data (e.g. the decoded block); and a power source 1020 which may be external to the receiver 100. The receiver 100 may also comprise one or more network interface(s) (not shown). The decoder module 1040 represents the module that may be included in a device to perform the decoding functions. Additionally, the decoder module 1040 may be implemented as a separate element of the receiver 100 or may be incorporated within processor(s) 1000 as a combination of hardware and software as known to those skilled in the art.

The stream may be obtained from a source. According to different embodiments, the source can be, but is not limited to:
- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).
According to different embodiments, the decoded block may be sent to a destination, e.g. a display device. As an example, the decoded block is stored in a remote or in a local memory, e.g. a video memory (e.g. a Decoder Picture Buffer) or a RAM, a hard disk. In a variant, the decoded block is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.
According to a specific and non-limiting embodiment, the receiver 100 further comprises a computer program stored in the memory 1030. The computer program comprises instructions which, when executed by the receiver 100, in particular by the processor 1000, enable the receiver to execute the decoding method described with reference to figures 3 to 7. According to a variant, the computer program is stored externally to the receiver 100 on a non-transitory digital data support, e.g. on an external storage medium such as a HDD, CD-ROM, DVD, a read-only and/or DVD drive and/or a DVD Read/Write drive, all known in the art. The receiver 100 thus comprises a mechanism to read the computer program. Further, the receiver 100 could access one or more Universal Serial Bus (USB)-type storage devices (e.g., "memory sticks.") through corresponding USB ports (not shown).
According to exemplary and non-limiting embodiments, the receiver 100 can be, but is not limited to:
- a mobile device;
- a communication device;
- a game device;
- a set top box;
- a TV set;
- a tablet (or tablet computer);
- a laptop ;
- a video player, e.g. a Blu-ray player, a DVD player;
- a display and
- a decoding chip or decoding device.

On the **Figures 3 to 7**, the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the disclosure are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

**Figure 3** represents a flowchart of a decoding method according to a specific and non-limiting embodiment.
The method starts at step S100. At step S110, a receiver such as the receiver 100 accesses at least one input stream. At step S120, the receiver decodes a decoded block of color samples from the accessed stream. At step S130, the receiver performs multiple passes of filtering of SAO type, i.e. at least two passes, on the decoded block. According to the present principles, a maximum number of passes may be decoded from the stream at a sequence level, (e.g. from a Sequence Parameter Set (SPS)), at a picture level (e.g. from a Picture Parameter Set) or at a slice level (e.g. from a slice header). In the table 1 of the Annex, the maximum number of passes sao_multi_pass_num is decoded from a SPS. The syntax defined in the tables 1 to 6 are adapted from HEVC syntax. It will be appreciated, however, that the present principles are not restricted to this specific syntax.
The number of passes may be different per slice and per color (Y, Cb and Cr). Therefore, the exact number of passes for a color and a slice may be specified as indicated in italics in the table 2 of the Annex.
**slice_sao_luma_flag** equal to 1 specifies that SAO is enabled for the luma component in the current slice for the current pass; slice_sao_luma_flag equal to 0 specifies that SAO is disabled for the luma component in the current slice for the current pass. When slice_sao_luma_flag is not present, it is inferred to be equal to 0. In the example of table 2, the value of the syntax element slice_sao_luma_flag for a pass is conditioned by the value of the same syntax element in the previous pass. The same is true for the chroma components.
The method ends at step S140. The method may be iterated to filter all blocks of an image and all images of a sequence. The filtered block may be stored in a DPB for future use during prediction.

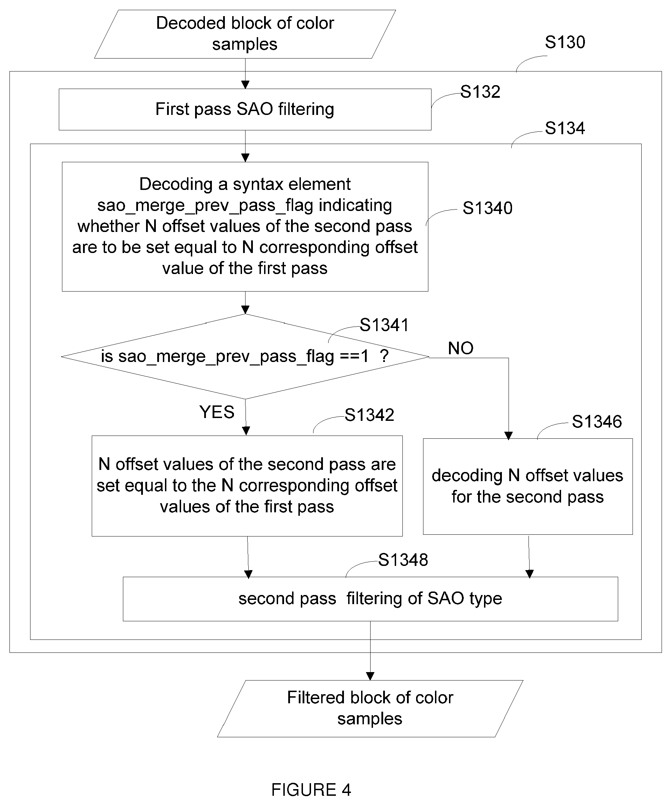

**Figure 4** represents a detailed flowchart of the step S130 according to a specific and non-limiting embodiment.
At step S132, the receiver performs a first pass of filtering of SAO type. The step S132 comprises classifying the color samples of the decoded block into categories and adding an offset value to at least one color sample depending on its category. The offset value may be decoded from the stream or derived from at least offset values of a neighboring decoded block. According to a specific example, the first pass of filtering of SAO type is done as described in section 8.7.3 of the document ITU-T H.265 entitled *"High Efficiency Video Coding".*
At step S134, the receiver performs a second pass of filtering of SAO type to obtain a filtered block of color samples that may be used for future prediction.

At step S1340, the receiver decodes a syntax element sao_merge_prev_pass_flag indicating whether N offset values (i.e. absolute values of the offsets and possibly but not necessarily their signs) of the second pass are to be set equal to N corresponding offset values of the first pass. As an example, N=4 as in HEVC and sao_offset_abs[pass][cIdx][rx][ry][i]= sao_offset_abs[pass-1] [cIdx][rx][ry][i]=, for i ∈ {0,1,2,3}, cIdx indicates the color component, rx and ry indicates the position of the block within an image. This embodiment is illustrated by tables 3 and 5 of the Annex. These tables represents an HEVC syntax amended (in Italics) according to the present principles. In table 5, a variant of table 3 is disclosed wherein one syntax element sao_merge_prev_pass_flag is decoded for the luma (i.e. sao_merge_prev_pass_luma_flag) and one for the chroma (i.e. sao_merge_prev_pass_chroma_flag).

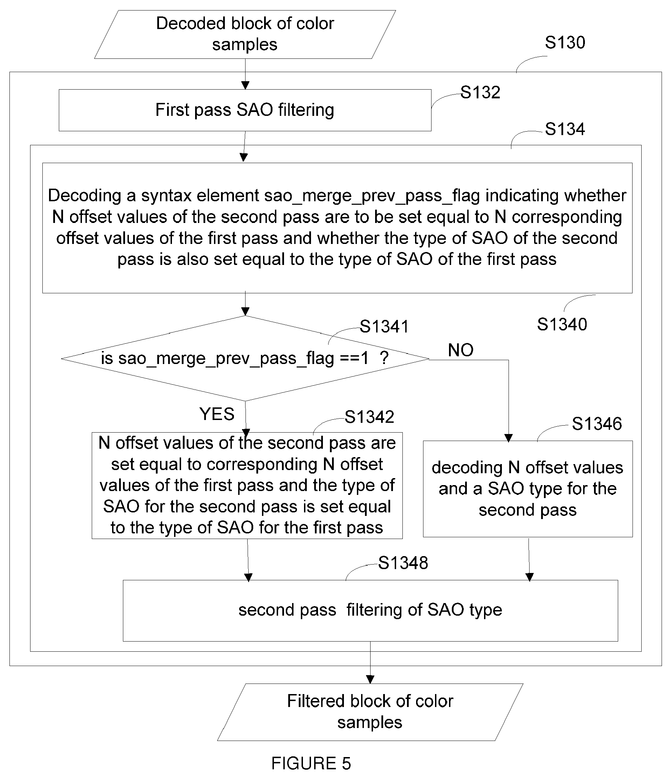

In a variant of step S1340, illustrated by **figure 5**, the syntax element sao_merge_prev_pass_flag indicates whether N offset values (i.e. absolute values of the offsets and possibly but no necessarily their signs) of the second pass are to be set equal to N corresponding offset values of the first pass and whether in addition the type of SAO (between OFF, BO and EO) of the second pass is also set equal to the type of SAO of the first pass. This embodiment is illustrated by tables 4 and 6 of the Annex. These tables represents an HEVC syntax amended (in Italics) according to the present principles. In table 6, a variant of table 4 is disclosed wherein one syntax element sao_merge_prev_pass_flag is decoded for the luma (i.e. sao_merge_prev_pass_luma_flag) and one for the chroma (i.e. sao_merge_prev_pass_chroma_flag). In the examples of tables 4 and 6, the signs of the offsets of the second pass are set equal to the signs of the offsets of the first pass.

In the two variants of S1340, neither the EO class (indicated by sao_eo_class_luma and sao_eo_class_chroma in HEVC) nor the BO starting band position (indicated by the sao_band_position syntax element in HEVC) are set equal to the corresponding parameters of the previous pass. Namely, these filtering parameters (EO class and BO starting band position) are decoded from the stream. This makes it possible to improve the filtering with an acceptable bit rate increase.

In a specific embodiment, the sao_merge_prev_pass_flag is decoded only in the case where filtering parameters (e.g. sao_type_idx_luma, sao_type_idx_chroma, sao_band_position, sao_eo_class_luma, sao_eo_class_chroma, sao_offset_abs and sao_offset_sign) are not derived from corresponding filtering parameters of a neighboring decoded block, i.e. when sao_merge_left_flag and sao_merge_up_flag are both equal to zero. Tables 3, of the Annex illustrate this specific embodiment.

In the case where, at step S1341 of figure 4, sao_merge_prev_pass_flag (e.g. sao_merge_prev_pass_flag==1) indicates that N offset values of the second pass are to be set equal to N corresponding offset values of the first pass, then the N offset values of the second pass are set equal to N corresponding offset values of the first pass at step S1342, e.g. by copying the offset values of the first pass into the offset values of the second pass. The other filtering parameters (i.e. type of SAO, class in case of EO mode, band position in case of BO type, possibly the signs of the offsets) may be decoded from the stream.

Otherwise, in the case sao_merge_prev_pass_flag (e.g. sao_merge_prev_pass_flag==0) indicates that no offset value of the second pass is to be set equal to one offset value of the first pass, then the N offset values for the second pass are decoded at step S1346 of figure 4 from the stream. The other filtering parameters (type of SAO, class in case of EO mode, band position in case of BO type, possibly the signs of the offsets) may be decoded from the stream.

In the case where sao_merge_prev_pass_flag (e.g. sao_merge_prev_pass_flag==1) indicates that N offset values (i.e. absolute values of the offsets and possibly their signs) of the second pass are to be set equal to N corresponding offset values of the first pass and that, in addition, the type of SAO (between OFF, BO and EO) of the second pass is to be set equal to the type of SAO of the first pass, then the N offset values of the second pass are set equal to the N corresponding offset values of the first pass and the type of SAO of the second pass is set equal to the type of SAO of the first pass at step S1342, e.g. by copying the N offset values of the first pass into the N offset values of the second pass and by copying the type of SAO of the first pass into the type of SAO of the second pass. The other filtering parameters (class in case of EO type, band position in case of BO type, possibly the signs of the offsets) may be decoded from the stream.

Otherwise, the N offset values for the second pass and the type of SAO for the second pass are decoded at step S1346 of figure 5 from the stream. The other filtering parameters (class in case of EO type, band position in case of BO type, possibly the signs of the offsets) may be also decoded from the stream.
With respect to the signs of the offsets the following may apply.

In the case where the first pass is of BO type and the second pass is of EO type, only the absolute values of the offsets are copied from the first pass, the signs being inferred from the EO classes of the second pass.

In a variant, if the first pass is of EO type and the second pass is of BO type, only the absolute values of the offsets are copied from the first pass and the signs are decoded from the stream.

In a variant, if the first pass is of BO type and the second pass is of BO type, both the absolute values and the signs may be derived from the first pass.

In a variant, if the first pass is of EO type and the second pass is of EO type, only the absolute values of the offsets are copied from the first pass, the signs being inferred from the EO classes of the second pass.

In a variant, only a sub-set of the N offset values of the second pass is to be set equal to corresponding offset values of the first pass. The sub-set of the N offset values to be derived from the previous pass may be specified by default or indicated by additional syntax element(s). The other offset values of the N offset values may be decoded in step S134 from the stream.

In a variant, in the case where the offset values of the previous pass are all zero, sao_merge_prev_pass_flag is not decoded from the stream. In this case, current offset values are inferred to be zero, or are derived from neighboring decoded blocks.

At step S1348, the color samples of the decoded block are filtered responsive to the offset values and possibly the type of SAO filtering obtained at step S1342, S1346 and/or S1344. To this aim, the color samples of the decoded block are classified into M categories (N≤M) and the offset values obtained at step S1342, S1346 and/or S1344 are added to the color samples in the corresponding categories. In a specific embodiment, N < M. As an example, M=5 and N=4. In another exemple, M=32 and N=4.

The syntax element sao_merge_prev_pass_flag makes it possible to get offset values from a previous pass without encoding them and this independently of the class of EO filtering (i.e. EO_45, EO_90, EO_135, EO_180, etc) or independently of the band position of the BO filtering. Indeed, the syntax element sao_merge_prev_pass_flag is representative of a merging of offset values (and possibly type of SAO filtering) between successive passes as opposed to the spatial merging defined in HEVC by the flags sao_merge_left_flag and sao_merge_up_flag. Therefore, in the case sao_merge_prev_pass_flag==1, the offset values (absolute values and possibly signs) for the N categories of the second pass may be obtained directly from the corresponding offset values of the N categories of the first pass while the EO class is EO_45 for the first pass and the EO class is EO_135 for the second pass.

In a specific embodiment, for a given block of color samples and for a given pass of filtering, the type of filtering may be constrained by the type of filtering of the previous pass. For example, if the filtering is disabled during the previous pass (sao_type_idx_luma[pass-1]==0), then the filtering for the current pass is also disabled or enabled with parameters derived from left and up neighboring blocks (e.g. as for the HEVC spatial merge). In a variant, if the filtering is disabled during the previous pass (sao_type_idx_luma[pass-1]==0), then the filtering for the current pass is disabled.

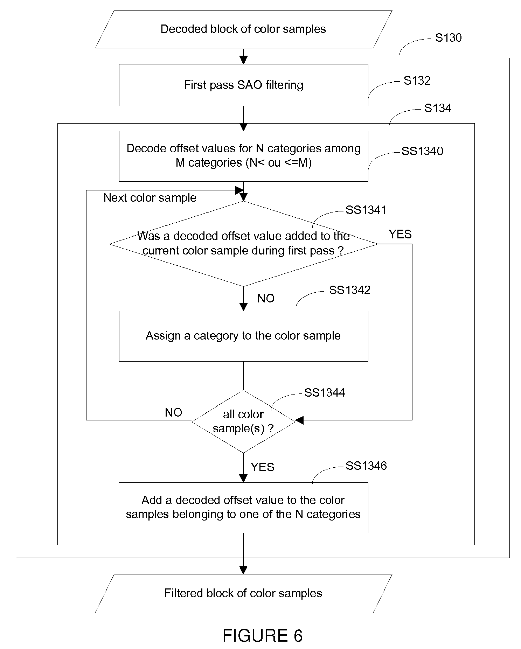

**Figure 6** represents a detailed flowchart of the step S130 according to another specific and non-limiting embodiment.

At step S132, the receiver performs a first pass of filtering of SAO type. The step S132 comprises classifying the color samples of the decoded block into categories and adding an offset value to at least one color sample depending on its category. The offset value may be decoded from the stream or derived from an offset value of a neighboring decoded block. According to a specific example, the first pass of filtering of SAO type is done as described in section 8.7.3 of the document ITU-T H.265 entitled *"High Efficiency Video Coding".*

At step S134, the receiver performs a second pass of filtering of SAO type.

At step SS1340, the receiver decodes or derives (e.g. from neighboring blocks) offset values for N categories among M categories (N≤ M). In a specific embodiment N<M. At step SS1341, the receiver determines whether a decoded offset value was added to the current sample during the first pass of filtering. In the case where a decoded offset value was added to the current sample during the first pass, then the color sample is not classified and the method continues at step SS1344 with a next color sample. In the case where no decoded offset value was added to the current sample during the first pass, then the method continues at step SS1342 and a category among the M categories is assigned to the current sample. Once, all color samples of the decoded block are processed, the method continues at step SS1346 by adding a decoded offset value to the color samples belonging to one of the N categories on the basis of their categories. In this embodiment, the color samples classified in one of the N categories for which an offset value is decoded from the stream and thus added during the first pass are not considered anymore during the second filtering pass (i.e. no offset value is added or offset value is inferred to be zero). This makes it possible to have offset values for the second pass that are more precise to correct color samples not corrected during the first pass. The color samples in the other categories (i.e. not the N ones) remains unchanged or are added a zero offset value.

In a variant of step SS1341, the receiver determines whether a non-zero decoded offset value was added to the current sample during the first pass of filtering. In the case where a non-zero decoded offset value was added to the current sample during the first pass, then the color sample is not classified and the method continues at step SS1344 with a next color sample. In the case where no decoded offset value was added to the current sample during the first pass, then the method continues at step SS1342 and a category among the M categories is assigned to the current sample. Once, all color samples are processed the method continues at step SS1346 by adding a decoded offset value to the color samples belonging to one of the N category.
In this embodiment, the color samples classified in one of the N categories for which a non-zero offset value is decoded from the stream and thus added during the first pass are not considered anymore during the second filtering pass. This makes it possible to have offset values for the second pass that are more precise to correct color samples not corrected during the first pass.

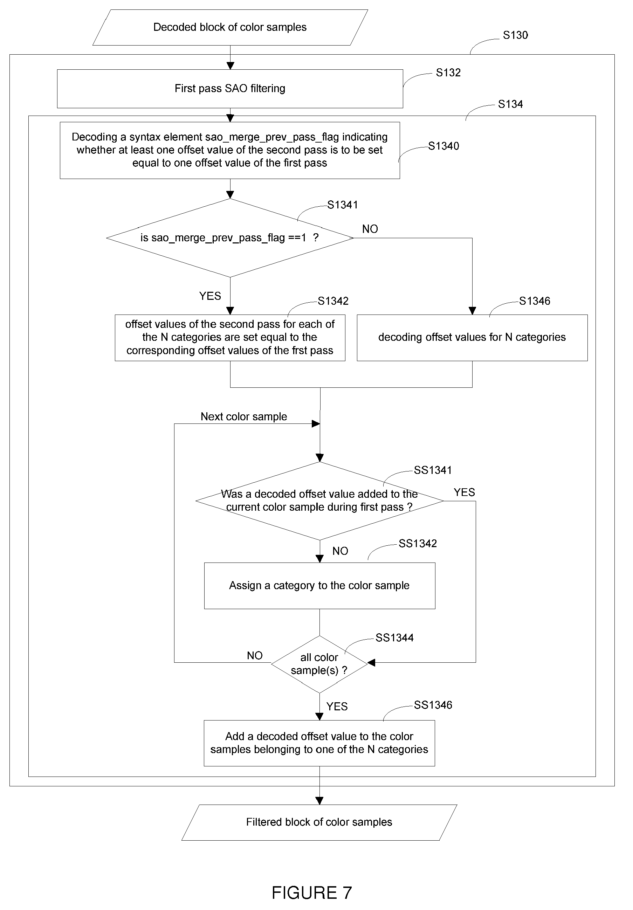

**Figure 7** represents a detailed flowchart of the step S130 according to another specific and non-limiting embodiment combination the embodiments of figure 4 and 6. The steps identical to the steps of figures 3 and 4 are identified with the same numerical references and are not further described. The embodiments of figure 5 and 6 may also be combined.

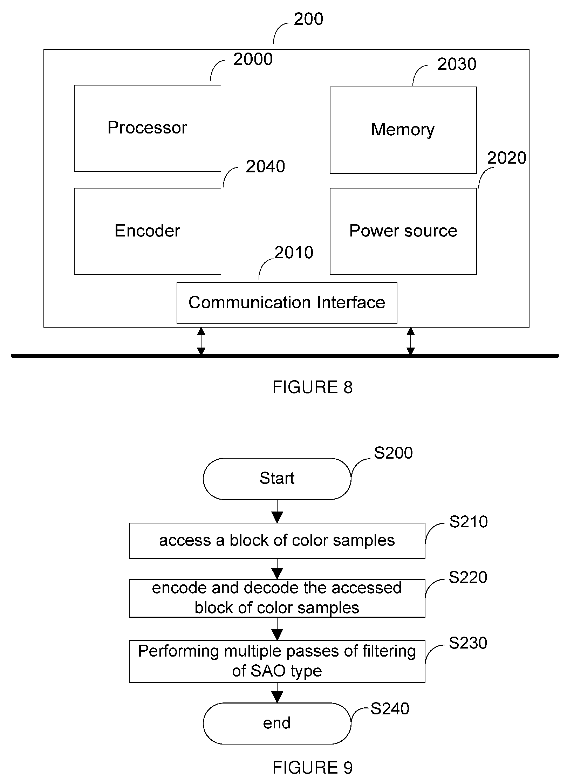

**Figure 8** represents an exemplary architecture of a transmitter 100 configured to encode a block of color samples in a stream according to a non-limiting embodiment.

The transmitter 200 comprises one or more processor(s) 2000, which could comprise, for example, a CPU, a GPU and/or a DSP (English acronym of Digital Signal Processor), along with internal memory 2030 (e.g. RAM, ROM, and/or EPROM). The transmitter 200 comprises one or more communication interface(s) 2010 (e.g. a keyboard, a mouse, a touchpad, a webcam), each adapted to display output information and/or allow a user to enter commands and/or data (e.g. a stream); and a power source 2020 which may be external to the transmitter 200. The transmitter 200 may also comprise one or more network interface(s) (not shown). Encoder module 2040 represents the module that may be included in a device to perform the coding functions. Additionally, encoder module 2040 may be implemented as a separate element of the transmitter 200 or may be incorporated within processor(s) 2000 as a combination of hardware and software as known to those skilled in the art.
The block of color samples may be obtained from a source. According to different embodiments, the source can be, but is not limited to:
- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).
According to different embodiments, the stream may be sent to a destination. As an example, the stream is stored in a remote or in a local memory, e.g. a video memory or a RAM, a hard disk. In a variant, the stream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.
According to an exemplary and non-limiting embodiment, the transmitter 200 further comprises a computer program stored in the memory 2030. The computer program comprises instructions which, when executed by the transmitter 200, in particular by the processor 2000, enable the transmitter 200 to execute the encoding method described with reference to figure 9 and all of its variants (figures 4 to 7). According to a variant, the computer program is stored externally to the transmitter 200 on a non-transitory digital data support, e.g. on an external storage medium such as a HDD, CD-ROM, DVD, a read-only and/or DVD drive and/or a DVD Read/Write drive, all known in the art. The transmitter 200 thus comprises a mechanism to read the computer program. Further, the transmitter 200 could access one or more Universal Serial Bus (USB)-type storage devices (e.g., "memory sticks.") through corresponding USB ports (not shown).
According to exemplary and non-limiting embodiments, the transmitter 200 can be, but is not limited to:
- a mobile device;
- a communication device;
- a game device ;
- a tablet (or tablet computer);
- a laptop ;
- a still image camera;
- a video camera ;
- an encoding chip or encoding device;
- a still image server; and
- a video server (e.g. a broadcast server, a video-on-demand server or a web server).

**Figure 9** represents a flowchart of a method for encoding a block of color samples in a stream according to a specific and non-limiting embodiment.
The method starts at step S200. At step S210, a transmitter such as the transmitter 200 accesses a block of color samples. At step S220, the transmitter encodes the block of color samples in a stream and decodes/reconstructs the coded block. At step S230, the transmitter performs multiple passes of filtering of SAO type, i.e. at least two passes, on the decoded block. It is known from the one skilled in the art that an encoding method encodes a block of color samples in a stream and also decodes/reconstructs the block for future use during prediction. Therefore, the encoding method comprises the same multiple passes of filtering of SAO type as the decoding method. Consequently, all the embodiments and variants disclosed with respect to step S130 of the decoding method on figures 4 to 7 also apply to the step S230 of the encoding method. In these embodiments, "decoding" is replaced by "coding".
The method ends at step S240.
The encoding method produces a stream that comprises information representative of a coded block of color samples and a syntax element for the coded block of color samples indicating whether at least one offset value (namely its absolute value and possibly but not necessarily its sign) of a second pass of a multiple passes of filtering of SAO type is to be set equal to one corresponding offset value of a first pass of the multiple passes of filtering of SAO type. The multiple passes filtering is to be applied on the coded block of color samples after its decoding. The stream may be stored (e.g. on a processor-readable medium) or transmitted.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

### Annex

**Table 1**

| seq_parameter_set_rbsp() { | **Descriptor** |
|---|---|
| ... | |
| **sample_adaptive_offset_enabled_flag** | u(1) |
| *if ( sample_adaptive_offset_enabled_flag ) {* | |
| ***sao_multi_pass_num*** | u(3) |
| *}* | |
| ... | |

**Table 2**

| slice_segment_header() { | **Descriptor** |
|---|---|
| ... | |
| if( sample_adaptive_offset_enabled_flag ) { | |
| **slice_sao_luma_flag***[0]* | u(1) |
| **slice_sao_chroma_flag***[0]* | u(1) |
| *for( pass = 1; pass < num_sao_pass; pass*++ *) {* | |
| *if ( slice_sao_luma_flag[pass-1]* II *slice_sao_chroma_flag[pass-1] ) {* | |
| ***slice_sao_luma_flag[pass]*** | u(1) |
| ***slice***_***sao***_***chroma***_***flag[pass]*** | u(1) |
| *}* | |
| *}* | |
| } | |
| ... | |

**Table 3**

| sao( rx, ry, *pass* ){ | **Descriptor** |
|---|---|
| if( rx > 0 ) { | |
| leftCtbInSliceSeg = CtbAddrInRs > SliceAddrRs | |
| leftCtbInTile = TileId[ CtbAddrInTs ] == TileId[ CtbAddrRsToTs[ CtbAddrInRs - 1 ] ] | |
| if( leftCtbInSliceSeg && leftCtbInTile ) | |
| **sao_merge_left_flag*[pass]*** | ae(v) |
| } | |
| if(ry > 0 && !sao_merge_left_flag ) { | |
| upCtbInSliceSeg = ( CtbAddrInRs - PicWidthInCtbsY ) >= SliceAddrRs | |
| upCtbInTile = TileId[ CtbAddrInTs ] == TileId[ CtbAddrRsToTs[ CtbAddrInRs - PicWidthInCtbsY ] ] | |
| if(upCtbInSliceSeg && upCtbInTile ) | |
| **sao_merge_up_flag*[pass]*** | ae(v) |
| } | |
| *if( pass>0* && *!sao_merge_left_flag[pass]* && *!sao_merge_up_flag[pass] ) {* | |
| ***sao_merge_prev_pass_flag[pass]*** | *ae(v)* |
| *}* | |
| *else {* | |
| ***sao_merge_prev_pass_flag[pass]* = *0*** | |
| *}* | |
| if(!sao_merge_up_flag && !sao_merge_left_flag ) { | |
| for( cIdx = 0; cIdx < 3; cIdx++ ) | |
| if( ( slice_sao_luma_flag*[pass]* && cIdx = = 0 ) II ( slice_sao_chroma_flag*[pass]* && cIdx > 0 ) ) { | |
| if( cIdx == 0 ) { | |
| **sao_type_idx_luma*[pass]*** | ae(v) |
| } | |
| else if(cIdx = = 1 ) { | |
| **sao_type_idx_chroma*[pass]*** | ae(v) |
| } | |
| if(SaoTypeIdx*[pass]* [ cIdx ] [ rx ] [ ry ] != 0 ) { | |
| *if ( pass*==*0* II*! sao_merge-prev_pass_flag ) {* | |
| for( i = 0; i < 4; i++ ) | |
| **sao_offset_abs*[pass]*** [ cIdx ] [ rx ][ ry ][ i ] | ae(v) |
| *else {* | |
| *for( i = 0; i < 4; i*++ *)* | |
| ***sao_offset_abs[pass]** [cIdx][ rx ][ ry ][ i ]* = *sao_offset_abs[pass-1 ] [ cIdx ][ rx ][ ry ][ i ]* | |
| *}* | |
| if(SaoTypeIdx[ cIdx ] [ rx ] [ ry ] == 1 ) { | |
| for( i = 0; i < 4; i++ ) | |
| if(sao_offset_abs***[pass]*** [ cIdx ][ rx ][ ry ][ i ] != 0 ) | |
| **sao_offset_sign*[pass]*** [ cIdx ][ [ rx ][ ry ][ i ] | ae(v) |
| **sao_band_position*[pass]*** [ cIdx ][ rx ][ ry ] | ae(v) |
| } else { | |
| if( cIdx == 0 ) | |
| **sao_eo_class_luma*[pass]*** | ae(v) |
| if( cIdx == 1 ) | |
| **sao**_**eo**_**class**_**chroma***[**pass**]* | ae(v) |
| } | |
| } | |
| } | |
| } | |
| } | |

**Table 4**

| sao( rx, ry, *pass* ){ | **Descriptor** |
|---|---|
| if( rx > 0 ) { | |
| leftCtbInSliceSeg = CtbAddrInRs > SliceAddrRs | |
| leftCtbInTile = TileId[ CtbAddrInTs ] == TileId[ CtbAddrRsToTs[ CtbAddrInRs - 1 ] ] | |
| if( leftCtbInSliceSeg && leftCtbInTile ) | |
| **sao_merge_left_flag*[pass]*** | ae(v) |
| } | |
| if( ry > 0 && !sao_merge_left_flag ) { | |
| upCtbInSliceSeg = ( CtbAddrInRs - PicWidthInCtbsY ) >= SliceAddrRs | |
| upCtbInTile = TileId[ CtbAddrInTs ] == TileId[ CtbAddrRsToTs[ CtbAddrInRs - PicWidthInCtbsY ] ] | |
| if( upCtbInSliceSeg && upCtbInTile ) | |
| **sao_merge_up_flag*[pass]*** | ae(v) |
| } | |
| *if( pass>0* && *!sao_merge_left_flag[pass]* && *!sao_merge_up_flag[pass] ) {* | |
| ***sao_merge_prev_pass_flag[pass]*** | *ae(v)* |
| *}* | |
| *else {* | |
| ***sao_merge_prev_pass_flag[pass]*** = ***0*** | |
| *}* | |
| if( !sao_merge_up_flag && !sao_merge_left_flag ) { | |
| for( cIdx = 0; cIdx < 3; cIdx++ ) | |
| if( (slice_sao_luma_flag*[pass]* && cIdx = = 0 ) II ( slice_sao_chroma_flag*[pass]* && cIdx > 0 ) ) { | |
| *if ( pass>0* && *!sao_merge_prev_pass_flag ) {* | |
| if( cIdx = = 0 ) { | |
| **sao_type_idx_luma*[pass]*** | ae(v) |
| } | |
| else if( cIdx = = 1 ) { | |
| **sao_type_idx_chroma*[pass]*** | ae(v) |
| } | |
| *}* | |
| *else {* | |
| ***sao_type_idx_luma[pass]*** = *sao_type_idx_luma[pass-1]* | |
| ***sao_type_idx_chroma[pass]** = sao_type_idx_chroma[pass-1]* | |
| *}* | |
| if( SaoTypeIdx*[pass]* [ cIdx ][ rx ][ ry ] != 0 ) { | |
| *if ( pass*==*0* \|\|*! sao_merge_prev_pass_flag ) {* | |
| for( i = 0; i < 4; i++ ) | |
| **sao_offset_abs*[pass]*** [ cIdx ][ rx ][ ry ][ i ] | ae(v) |
| *else {* | |
| *for( i* = *0; i < 4; i*++*)* | |
| ***sao_offset_abs[pass]** [ cIdx ][ rx ][ ry ][ i ]* = *sao_offset_abs[pass-1 ] [ cIdx ][ rx ][ ry ][ i ]* | |
| *}* | |
| if( SaoTypeIdx[ cIdx ] [ rx ][ ry ] == 1 ) { | |
| for( i = 0; i < 4; i++ ) | |
| if( sao_offset_abs***[pass]*** [ cIdx ][ rx ][ ry ][ i ] != 0 ) | |
| *if ( pass*==*0* II*!sao_merge_prev_pass_flag[pass]) {* | |
| **sao_offset_sign*[pass]*** [ cIdx ][ [ rx ][ ry ][ i ] | ae(v) |
| *else* | |
| ***sao_offset_sign[pass]** [ cIdx ][ rx ][ ry ][ i ]* = *sao_offset_sign[pass-1 ] [ cIdx ][ rx ][ ry ][ i ]* | |
| **sao_band_position*[pass]*** [ cIdx ][ rx ][ ry ] | ae(v) |
| } else { | |
| if( cIdx == 0 ) | |
| **sao_eo_class_luma*[pass]*** | ae(v) |
| if( cIdx == 1 ) | |
| **sao**_**eo**_**class**_**chroma***[**pass**]* | ae(v) |
| } | |
| } | |
| } | |
| } | |
| } | |

**Table 5**

| sao( rx, ry, *pass* ){ | **Descriptor** |
|---|---|
| if( rx > 0 ) { | |
| leftCtbInSliceSeg = CtbAddrInRs > SliceAddrRs | |
| leftCtbInTile = TileId[ CtbAddrInTs ] == TileId[ CtbAddrRsToTs[ CtbAddrInRs - 1 ] ] | |
| if( leftCtbInSliceSeg && leftCtbInTile ) | |
| **sao_merge_left_flag*[pass]*** | ae(v) |
| } | |
| if( ry > 0 && !sao_merge_left_flag ) { | |
| upCtbInSliceSeg = ( CtbAddrInRs - PicWidthInCtbsY ) >= SliceAddrRs | |
| upCtbInTile = TileId[ CtbAddrInTs ] == TileId[ CtbAddrRsToTs[ CtbAddrInRs - PicWidthInCtbsY ] ] | |
| if( upCtbInSliceSeg && upCtbInTile ) | |
| **sao_merge_up_flag*[pass]*** | ae(v) |
| } | |
| if( !sao_merge_up_flag && !sao_merge_left_flag ) { | |
| for( cIdx = 0; cIdx < 3; cIdx++ ) | |
| if( (slice_sao_luma_flag*[pass]* && cIdx = = 0 ) II ( slice_sao_chroma_flag*[pass]* && cIdx > 0 ) ) { | |
| if( cIdx = = 0 ) { | |
| *if ( pass>0 )* | |
| ***sao_merge***_***prev***_***pass***_***luma***_***flag**[**pass**]* | ae(v) |
| **sao_type_idx_luma*[pass]*** | ae(v) |
| } | |
| else if( cIdx = = 1 ) { | |
| *if ( pass>0 )* | |
| ***sao_merge***_***prev***_***pass_chroma***_***flag**[**pass**]* | ae(v) |
| **sao_type_idx_chroma*[pass]*** | ae(v) |
| } | |
| if( SaoTypeIdx*[pass]* [ cIdx ][ rx ] [ ry ] != 0 ) { | |
| *if ( pass==0* II*(!sao_merge_prev_pass_luma_flag[pass]* && *cIdx==0)* II*(!sao_merge_prev_pass_chroma_flag[pass]* && *cIdx>0)) {* | |
| for( i = 0; i < 4; i++ ) | |
| **sao_offset_abs*[pass]*** [ cIdx ][ rx ][ ry ][ i ] | ae(v) |
| *else {* | |
| *for( i = 0; i < 4; i*++ *)* | |
| ***sao_offset_abs[pass]** [ cIdx ][ rx ][ ry ][ i ]* = *sao_offset_abs[pass-1 ] [ cIdx ][ rx ][ ry ][ i ]* | |
| *}* | |
| if( SaoTypeIdx[ cIdx ] [ rx ] [ ry ] == 1 ) { | |
| for( i = 0; i < 4; i++ ) | |
| if( sao_offset_abs***[pass]*** [ cIdx ][ rx ][ ry ][ i ] != 0 ) | |
| **sao_offset_sign*[pass]*** [ cIdx ][ rx ][ ry ][ i ] | ae(v) |
| **sao_band_position*[pass]*** [ cIdx ][ rx ][ ry ] | ae(v) |
| } else { | |
| if( cIdx == 0 ) | |
| **sao_eo_class_luma*[pass]*** | ae(v) |
| if( cIdx == 1 ) | |
| **sao**_**eo**_**class**_**chroma***[**pass**]* | ae(v) |
| } | |
| } | |
| } | |
| } | |
| } | |

**Table 6**

| sao( rx, ry, *pass* ){ | **Descriptor** |
|---|---|
| if( rx > 0 ) { | |
| leftCtbInSliceSeg = CtbAddrInRs > SliceAddrRs | |
| leftCtbInTile = TileId[ CtbAddrInTs ] == TileId[ CtbAddrRsToTs[ CtbAddrInRs - 1 ] ] | |
| if( leftCtbInSliceSeg && leftCtbInTile ) | |
| **sao_merge_left_flag*[pass]*** | ae(v) |
| } | |
| if( ry > 0 && !sao_merge_left_flag ) { | |
| upCtbInSliceSeg = ( CtbAddrInRs - PicWidthInCtbsY ) >= SliceAddrRs | |
| upCtbInTile = TileId[ CtbAddrInTs ] == TileId[ CtbAddrRsToTs[ CtbAddrInRs - PicWidthInCtbsY ] ] | |
| if( upCtbInSliceSeg && upCtbInTile ) | |
| **sao_merge_up_flag*[pass]*** | ae(v) |
| } | |
| if( !sao_merge_up_flag && !sao_merge_left_flag ) { | |
| for( cIdx = 0; cIdx < 3; cIdx++ ) | |
| if( (slice_sao_luma_flag*[pass]* && cIdx = = 0 ) II ( slice_sao_chroma_flag*[pass]* && cIdx > 0 ) ) { | |
| if( cIdx = = 0 ) { | |
| *if ( pass>0 )* | |
| ***sao_merge_prev_pass_luma_flag[pass]*** | ae(v) |
| *if ( pass*==*0* II *!sao_merge_prev_pass_luma_flag[pass] )* | |
| **sao_type_idx_luma*[pass]*** | ae(v) |
| *else* | |
| ***sao_type_idx_luma[pass]** = sao_type_idx_luma[pass-1]* | |
| } | |
| else if( cIdx = = 1 ) { | |
| *if ( pass>0 )* | |
| ***sao_merge_prev_pass_chroma_flag[pass]*** | ae(v) |
| *if ( pass*==*0* II *!sao_merge_prev_pass_chroma_flag[pass] )* | |
| **sao_type_idx_chroma*[pass]*** | ae(v) |
| *else* | |
| ***sao_type_idx_chroma[pass]*** = *sao_type_idx_luma[pass-1 ]* | |
| } | |
| if( SaoTypeIdx*[pass]* [ cIdx ] [ rx ] [ ry ] != 0 ) { | |
| *if ( pass==0* II*(!sao_merge_prev_pass_luma_flag[pass]* && *cIdx==0)* II*(!sao_merge_prev_pass_chroma_flag[pass]* && *cIdx>0)) {* | |
| for( i = 0; i < 4; i++ ) | |
| **sao_offset_abs*[pass]*** [ cIdx ][ rx ][ ry ][ i ] | ae(v) |
| *else {* | |
| *for( i = 0; i < 4; i*++ *)* | |
| ***sao_offset_abs[pass]** [ cIdx ][ rx ][ ry ][ i ]* = *sao_offset_abs[pass-1 ] [ cIdx ][ rx ][ ry ][ i ]* | |
| *}* | |
| if( SaoTypeIdx[ cIdx ] [ rx ] [ ry ] == 1 ) { | |
| for( i = 0; i < 4; i++ ) | |
| if( sao_offset_abs***[pass]*** [ cIdx ][ rx ][ ry ][ i ] != 0 ) | |
| *if ( pass==0* II*(!sao_merge_prev_pass_luma_flag[pass]* && *cIdx==0)* II*(!sao_merge_prev_pass_chroma_flag[pass]* && *cIdx>0)) {* | |
| **sao_offset_sign*[pass]*** [ cIdx ][ rx ][ ry ][ i ] | ae(v) |
| *else* | |
| ***sao_offset_sign[pass]** [ cIdx ][ rx ][ ry ][ i ]* = *sao_offset_sign[pass-1] [ cIdx ][ rx ][ ry ][ i ]* | |
| **sao_band_position*[pass]*** [ cIdx ][ rx ][ ry ] | ae(v) |
| } else { | |
| if( cIdx == 0 ) | |
| **sao_eo_class_luma*[pass]*** | ae(v) |
| if( cIdx == 1 ) | |
| **sao**_**eo**_**class**_**chroma***[**pass**]* | ae(v) |
| } | |
| } | |
| } | |
| } | |
| } | |

## Claims

1. A decoding method comprising :
- decoding (S120) a block of color samples;
- applying a first pass (S130, S132) and a second pass (S130, S134, S1348) of filtering on said decoded block of color samples, filtering comprising classifying the color samples into categories and adding a decoded offset value to color samples in at least one category;
wherein applying a second pass (S130, S134, S1348) of filtering comprises:
- decoding (S1340) a syntax element indicating whether at least one offset value of the second pass is to be set equal to one offset value of the first pass;
- determining (S1341, S1342, S1344, S1346) the at least one offset value of the second pass responsive to said decoded syntax element.

2. The decoding method of claim 1, wherein the syntax element further indicates whether the type of SAO filtering for the second pass is to be set equal to the type of SAO filtering for the first pass.

3. The decoding method of claim 1 or 2, wherein the color samples to which a decoded offset value is added during the first pass are not considered during the second pass of filtering.

4. The decoding method of claim 1 or 2, wherein the color samples to which a non-zero decoded offset value is added during the first pass are not considered during the second pass of filtering.

5. A coding method comprising:
- coding and decoding (S220) a block of color samples;
- applying a first pass (S230, S132) and a second pass (S230, S134, S1348) of filtering on said decoded block of color samples, filtering comprising classifying the color samples into categories and adding a coded offset value to color samples in at least one category;
wherein applying a second pass (S230, S134, S1348) of filtering comprises:
- coding (S1340) a syntax element indicating whether at least one offset value of the second pass is to be set equal to one offset value of the first pass;
- determining (S1341, S1342, S1344, S1346) the at least one offset value of the second pass responsive to said coded syntax element.

6. The coding method of claim 5, wherein the syntax element further indicates whether the type of SAO filtering for the second pass is to be set equal to the type of SAO filtering for the first pass.

7. The coding method of claim 5 or 6, wherein the color samples to which a coded offset value is added during the first pass are not considered during the second pass of filtering.

8. The coding method of claim 5 or 6, wherein the color samples to which a non-zero coded offset value is added during the first pass are not considered during the second pass of filtering.

9. A decoding device comprising :
- means for decoding a block of color samples;
- means for applying a first pass and a second pass of filtering on said decoded block of color samples, filtering comprising classifying the color samples into categories and adding a decoded offset value to color samples in at least one category;
wherein said means for applying a second pass of filtering comprises:
- means for decoding a syntax element indicating whether at least one offset value of the second pass is to be set equal to one offset value of the first pass;
- means for determining the at least one offset value of the second pass responsive to said decoded syntax element.

10. The decoding device according to claim 9, wherein said decoding device is configured to execute the steps of the decoding method according to any of claims 1 to 4.

11. A coding device comprising:
- means for coding and decoding a block of color samples;
- means for applying a first pass and a second pass of filtering on said decoded block of color samples, filtering comprising classifying the color samples into categories and adding a coded offset value to color samples in at least one category;
wherein said means for applying a second pass of filtering comprises:
- means for coding a syntax element indicating whether at least one offset value of the second pass is to be set equal to one offset value of the first pass;
- means for determining the at least one offset value of the second pass responsive to said coded syntax element.

12. The coding device according to claim 11, wherein said coding device is configured to execute the steps of the coding method according to any of claims 5 to 8.

13. A non-transitory computer readable medium with instructions stored therein which, upon execution, instruct at least one processor to:
- decode a block of color samples;
- apply a first pass and a second pass of filtering on said decoded block of color samples, filtering comprising classifying the color samples into categories and adding a decoded offset value to color samples in at least one category;
wherein to apply a second pass of filtering comprises:
- to decode a syntax element indicating whether at least one offset value of the second pass is to be set equal to one offset value of the first pass;
- to determine the at least one offset value of the second pass responsive to said decoded syntax element.

14. A non-transitory computer readable medium with instructions stored therein which, upon execution, instruct at least one processor to:
- code and decode a block of color samples;
- apply a first pass and a second pass of filtering on said decoded block of color samples, filtering comprising classifying the color samples into categories and adding a coded offset value to color samples in at least one category;
wherein to apply a second pass of filtering comprises:
- to code a syntax element indicating whether at least one offset value of the second pass is to be set equal to one offset value of the first pass;
- to determine the at least one offset value of the second pass responsive to said coded syntax element.

15. A stream comprising information representative of a coded block of color samples and a syntax element for the coded block of color samples indicating whether at least one offset value of a second pass of a multiple passes of filtering of SAO type is to be set equal one corresponding offset value of a first pass of the multiple passes of filtering of SAO type.
